# EUROPEAN PATENT APPLICATION

(11) **EP 3 944 235 A1**
(43) Date of publication of application: **26.01.2022**
(21) Application number: 19920310.0
(22) Date of filing: 18.03.2019
(51) Int. Cl.: G10L 17/04

(54) **SPEAKER IDENTIFICATION PROGRAM, SPEAKER IDENTIFICATION METHOD, AND SPEAKER IDENTIFICATION DEVICE**

(71) Applicant: FUJITSU LIMITED, Kanagawa 211-8588 (JP)
(72) Inventor: HASEGAWA, Sou, Kawasaki-shi, Kanagawa 211-8588 (JP)
(74) Representative: Hoffmann Eitle
(86) International application number: PCT/JP2019/011295
(87) International publication number: WO 2020/188724

(57) **Abstract**

A speaker identification device (100) executes learning processing for a learned model (110) using first learning data (101 to 103) for a specific person and second learning data (104 to 107) for another person different from the specific person. The speaker identification device (100) generates an updated model (111) as a result of the learning processing. The speaker identification device (100) acquires voice information (120) indicating a conversation voice, inputs the conversation voice to the updated model (111), and identifies a speaker who has spoken in speech sections (131 to 135) included in the conversation voice. The speaker identification device (100) classifies the speech sections (134 and 135) in which the speaker is identified as a person different from the specific person into each group of one or more groups. The speaker identification device (100) outputs an identification result of identifying the speaker as the specific person and a classification result of classifying the speech sections regarding the person different from the specific person.

## Description

### FIELD

The present invention relates to a speaker identification program, a speaker identification method, and a speaker identification device.

### BACKGROUND

Conventionally, there is a technique for identifying a speaker who is speaking in one of speech sections of a conversation voice. There is a prior art of learning a voice of a specific phrase spoken by a specific person in advance and making whether a speaker who is speaking in one of speech sections of a conversation voice is the specific person identifiable, for example.

Non-Patent Document 1: "Speaker Recognition API", [online], [Searched on March 14, 2019], Internet <URL: https://docs.microsoft.com/en-us/azure/cognitive-services/speaker-recognition/home>

### SUMMARY

### [TECHNICAL PROBLEM]

However, in the prior art, it is difficult to identify the speaker. For example, if a voice of a specific phrase spoken by a specific person is not learned in advance, whether the speaker who is speaking in one of speech sections of a conversation voice is the specific person is not able to be identified.

In one aspect, the present invention aims to make a speaker accurately identifiable.

### [SOLUTION TO PROBLEM]

According to one embodiment aspect, proposed are a speaker identification program, a speaker identification method, and a speaker identification device includes, generating a first identification model by executing learning processing for an identification model that identifies a speaker from input voice information using first learning data and second learning data, the first learning data being for each person of one or more persons and in which voice information that indicates a speech voice of the each person and label information that indicates the each person are associated, and the second learning data being for each another person different from the one or more persons and in which voice information that indicates a speech voice of the each another person and label information that indicates that the each another person is different from the one or more persons are associated; inputting voice information that indicates a conversation voice to the generated first identification model, and identifying a speaker who has spoken in each speech section of a plurality of speech sections included in the conversation voice as one of the one or more persons or the different person; classifying the speech section in which the speaker is identified as the different person into each group of one or more groups based on a voice characteristic of the speech section; and outputting the speech section in which the speaker is identified as one of the one or more persons in association with the identified person, and outputting a result of classifying the speech section in which the speaker is identified as the different person.

### [ADVANTAGEOUS EFFECTS OF INVENTION]

According to one aspect, a speaker is made accurately identifiable.

### BRIEF DESCRIPTION OF DRAWINGS

FIG. 1 is an explanatory diagram illustrating an example of a speaker identification method according to an embodiment.
FIG. 2 is an explanatory diagram illustrating an example of a speaker identification system 200.
FIG. 3 is a block diagram illustrating a hardware configuration example of a speaker identification device 100.
FIG. 4 is a block diagram illustrating a functional configuration example of the speaker identification device 100.
FIG. 5 is an explanatory diagram illustrating an example of a learned NN 500.
FIG. 6 is an explanatory diagram illustrating an example of learning data.
FIG. 7 is an explanatory diagram illustrating an example of receiving designation of a specific person.
FIG. 8 is an explanatory diagram illustrating an example of updating the learned NN 500.
FIG. 9 is an explanatory diagram illustrating an example of assigning a label to a speech section.
FIG. 10 is an explanatory diagram illustrating an example of classifying speech sections.
FIG. 11 is an explanatory diagram illustrating an example of displaying a correspondence result screen 1100.
FIG. 12 is a flowchart illustrating an example of an overall processing procedure.
FIG. 13 is a flowchart illustrating an example of a hybrid speaker identification processing procedure.

### DESCRIPTION OF EMBODIMENTS

Hereinafter, embodiments of a speaker identification program, a speaker identification method, and a speaker identification device according to the present invention will be described in detail with reference to the drawings.

### (Example of Speaker Identification Method According to Embodiment)

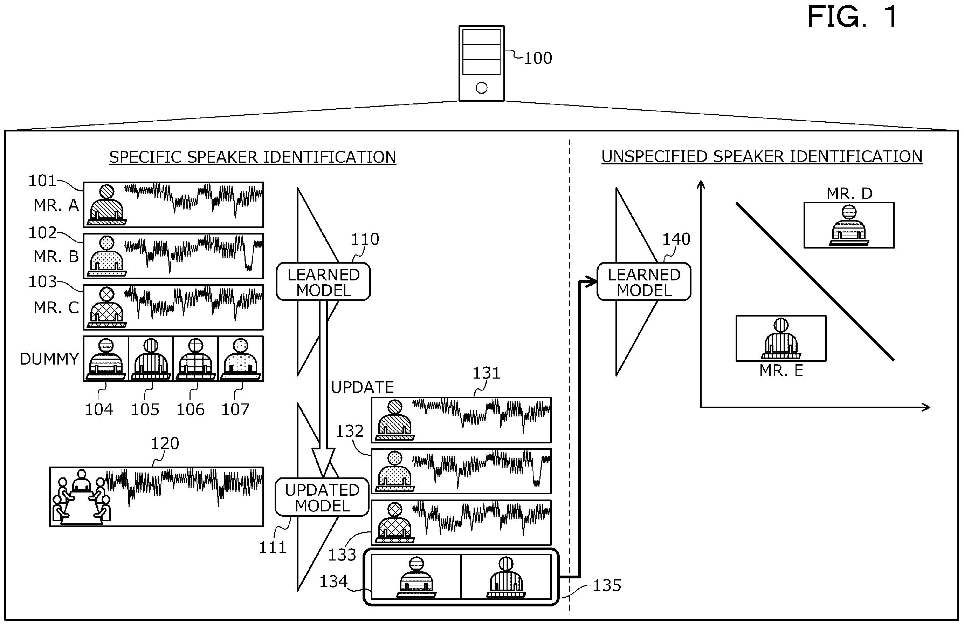

FIG. 1 is an explanatory diagram illustrating an example of a speaker identification method according to an embodiment. A speaker identification device 100 is a computer for making a speaker identifiable from voice. The speaker identification device 100 is used by, for example, a worker who tries to identify a speaker. The speaker identification device 100 is, for example, a server, a personal computer (PC), or the like.

Here, conventionally, there is a problem that accurately identifying a speaker from voice is difficult. For example, a specific speaker identification method that makes whether a speaker is a specific person registered in advance identifiable, an unspecified speaker identification method that assigns an ID instead of a specific person to a speaker to make the speaker identifiable, and the like are conceivable but accurately identifying a speaker is difficult.

Specifically, one method of the specific speaker identification method is conceivable, which causes an identification model to learn a voice of a specific phrase spoken by a specific person in advance, and makes whether a speaker in one of speech sections of a conversation voice is a specific person identifiable, using the identification model. However, in this method, whether a speaker in a speech section is a specific person is not able to be made identifiable unless the voice of a specific phrase spoken by the specific person is prepared in advance and the identification model learns the voice.

Therefore, in a case of specifying that a speaker in one of speech sections of a conversation voice that a plurality of persons is making is which of the plurality of persons, the voice of a specific phrase spoken by each person of the plurality of persons needs to be prepared and the identification model needs to learn the voice in advance. For this reason, a work load on the worker who tries to identify a speaker increases.

Moreover, there is a situation in which the voice of a specific phrase spoken by one of a plurality of persons is not able to be prepared and the identification model is not able to learn the voice. For example, in a situation of identifying a speaker in one of speech sections of a conversation voice in a conference in which some people inside a company and some people outside the company participate, it is difficult to prepare the voice of a specific phrase spoken by a person outside the company in advance. For this reason, if the voice of a specific phrase spoken by a person outside the company is not able to be learned by the identification model, a speaker in one of the speech sections of the conversation voice is identified as a person inside the company even if the speaker is actually a person outside the company, and the speaker is not able to be accurately identified.

Specifically, one method of the unspecified speaker identification method is conceivable, which classifies each speech section of the conversation voice into one of one or more groups corresponding to unspecified persons on the basis of a voice characteristic of the each speech section of the conversation voice, and assigns an ID. However, this method is not able to specify that a group specifically corresponds to which person and thus is not able to identify that a speaker in a speech section is a specific person. For this reason, the worker is not able to identify that the speaker in the speech section is specifically which person unless the worker hears the voice of the speech section, which increases the work load on the worker.

Furthermore, with this method, it is difficult to accurately classify the speech sections into groups, and there is a possibility to classify speech sections corresponding to different persons into the same group or classify speech sections corresponding to the same person into different groups. For example, it is more difficult to accurately classify the speech sections into groups as a bias in the amount of speeches among people in the conversation voice is larger. Furthermore, for example, it is more difficult to accurately classify the speech sections into groups as the number of people who have spoken in the conversation voice is larger. As a result, the worker is not able to accurately identify that the speaker in the speech section is specifically which person, which increases the work load on the worker.

Therefore, in the present embodiment, a speaker identification method of making a speaker accurately identifiable and reducing a work load on a worker by enabling combination of one method regarding specific speaker identification with one method regarding unspecified speaker identification will be described.

In FIG. 1, the speaker identification device 100 has an identification model. The identification model identifies a speaker from input voice information. The identification model is, for example, a neural network. In the following description, the neural network may be referred to as "NN". Specifically, the identification model is a learned model generated on the basis of learning data for 100 to 200 people, in which voice information indicating a speech voice of a person and label information indicating the person are associated with each other. In the example of FIG. 1, the speaker identification device 100 has a learned model 110.

Furthermore, the speaker identification device 100 has first learning data for each specific person of one or more specific persons. The first learning data is learning data in which voice information indicating a speech voice of a specific person and label information indicating the specific person are associated with each other. The specific person is a person whose learning data can be prepared in advance. In the example of FIG. 1, the specific persons are Mr. A, Mr. B, and Mr. C. In the example of FIG. 1, the speaker identification device 100 has first learning data 101 to 103.

The speaker identification device 100 has second learning data for each of other persons different from the one or more specific persons. The second learning data is learning data in which voice information indicating a speech voice of another person and label information indicating that the another person is different from the one or more specific persons are associated with each other. The label information does not indicate a specific person but indicates a dummy person. In the example of FIG. 1, the speaker identification device 100 has second learning data 104 to 107.

(1-1) The speaker identification device 100 executes learning processing for the identification model using the first learning data for each specific person of the one or more specific persons and the second learning data for each of the other persons different from the one or more specific persons. The speaker identification device 100 generates a first identification model as a result of the learning processing. The first identification model identifies a speaker who has spoken in a speech section as one of the one or more specific persons and the persons different from the one or more specific persons. The first identification model is, for example, an updated model after the learned model is updated by the learning processing. In the example of FIG. 1, the speaker identification device 100 generates an updated model 111.

(1-2) The speaker identification device 100 acquires voice information indicating a conversation voice. The speaker identification device 100 inputs the acquired voice information into the generated first identification model, and identifies the speaker who has spoken in each speech section of a plurality of speech sections included in the conversation voice as one of the one or more specific persons and the persons different from the one or more specific persons.

In the example of FIG. 1, the speaker identification device 100 acquires voice information 120 indicating the conversation voice, inputs the voice information 120 to the updated model 111, and identifies the speaker who has spoken in each speech section of the plurality of speech sections. Here, the conversation voice includes, for example, speech sections 131 to 135. Specifically, the speaker identification device 100 identifies the speaker who has spoken in the speech section 131 as Mr. A, the speaker who has spoken in the speech section 132 as Mr. B, and the speaker who has spoken in the speech section 133 as Mr. C. Furthermore, the speaker identification device 100 identifies the speaker who has spoken in the speech section 134 as a dummy person and the speaker who has spoken in the speech section 135 as a dummy person.

According to this processing, the speaker identification device 100 accurately identifies the speaker who has spoken in a speech section even if the conversation voice includes a speech section in which a person different from the one or more specific persons has spoken. For example, when the speaker who has spoken in a speech section is actually a person different from the one or more specific persons, the speaker identification device 100 can prevent the speaker from being erroneously identified as one of the one or more specific persons.

Therefore, the speaker identification device 100 can prevent the speech section in which the speaker is actually a person different from the specific persons from being mixed in the speech sections in which the speaker is identified as a specific person, and can accurately identify the speaker. In the example of FIG. 1, the speaker identification device 100 identifies the speakers who have spoken in the speech sections 134 and 135 as dummy persons without identifying the speakers as one of the specific persons of Mr. A, Mr. B, and Mr. C.

(1-3) The speaker identification device (100) classifies a speech section in which the speaker is identified as a person different from the one or more specific persons into each group of one or more groups on the basis of a voice characteristic of the speech section. A group corresponds to an unspecified person and exists by person. A group is given a label indicating a person as an ID, for example. The label indicating a person given as an ID is a label for convenience and may not correspond to a person speaking in the conversation voice other than the one or more specific persons. The voice characteristic is acquired using, for example, a learned model.

In the example of FIG. 1, there are a group to which the label indicating Mr. D is assigned as an ID and a group to which the label indicating Mr. E is assigned as an ID. The speaker identification device 100 inputs the voice information of the speech sections 134 and 135 into a learned model 140, and acquires the voice characteristics of the speech sections 134 and 135. The learned model 140 may be the same as the learned model 110, for example. The speaker identification device 100 classifies the speech section 134 into the group to which the label indicating Mr. D is assigned as an ID and the speech section 135 into the group to which the label indicating Mr. E is assigned as an ID on the basis of the acquired voice characteristics of the speech sections 134 and 135.

According to this processing, the speaker identification device 100 can classify the speech sections in which a person different from the one or more specific persons has spoken, for which preparation of the first learning data in advance is difficult, into groups by person, and can easily and specifically identify the speaker. Furthermore, since the speaker identification device 100 has already specified the speech sections in which the speaker is one of the one or more specific persons and can reduce the number of speech sections to be classified, the speaker identification device 100 can accurately classify the speech sections.

(1-4) The speaker identification device 100 outputs an identification result of identifying the speaker as one of the one or more specific persons and a classification result of classifying the speech section regarding a person different from the one or more specific persons. An output destination is, for example, a display unit included in the speaker identification device 100. The speaker identification device 100 outputs, for example, the speech section in which the speaker is identified as one of the one or more specific persons in association with the one specific person. Furthermore, the speaker identification device 100 outputs, for example, the result of classifying the speech section in which the speaker is identified as a person different from the one or more specific persons.

In the example of FIG. 1, the speaker identification device 100 displays the speech section 131 in which the speaker is identified as Mr. A in association with Mr. A, the speech section 132 in which the speaker is identified as Mr. B in association with Mr. B, and the speech section 133 in which the speaker is identified as Mr. C in association with Mr. C. Furthermore, the speaker identification device 100 displays the speech section 134 classified into the group to which the label indicating Mr. D is assigned as an ID in association with Mr. D, and the speech section 135 classified into the group to which the label indicating Mr. E as an ID in association with Mr. E.

As a result, the speaker identification device 100 can make the speaker who has spoken in each speech section of the plurality of speech sections included in the conversation voice accurately identifiable. For example, when the speaker who has spoken in a speech section is actually one of the one or more specific persons, the speaker identification device 100 can accurately identify the speaker as one of the one or more specific persons.

Furthermore, the speaker identification device 100 can accurately classify the speech section in which the speaker is identified as a person different from the one or more specific persons into a group by person, for example. Therefore, when the worker attempts to identify the speaker who has spoken in a speech section classified into a group as a specific person by listening to the voice of the speech section classified into the group, the speaker identification device 100 can reduce the work load on the worker.

Here, the case where the speaker identification device 100 has the first learning data for each specific person of the one or more specific persons has been described, but the present embodiment is not limited to the case. For example, the speaker identification device 100 has the first learning data for each specific person of a plurality of specific persons, and when generating the first identification model, the speaker identification device 100 may extract the first learning data for each specific person of designated one or more specific persons.

Here, the case where the speaker identification device 100 generates the first identification model has been described, but the embodiment is not limited to the case. For example, a device different from the speaker identification device 100 may generate the first identification model. In this case, the speaker identification device 100 acquires the first identification model from the device that has generated the first identification model.

Here, the case in which the speaker identification device 100 displays, on the display unit of its own device, the identification result of identifying the speaker as one of the one or more specific persons and the classification result of classifying the speech section regarding a person different from the one or more specific persons has been described, but the embodiment is not limited to the case. For example, there may be a case in which the speaker identification device 100 transmits, to a device different from the speaker identification device 100, the identification result of identifying the speaker as one of the one or more specific persons and the classification result of classifying the speech section regarding a person different from the one or more specific persons.

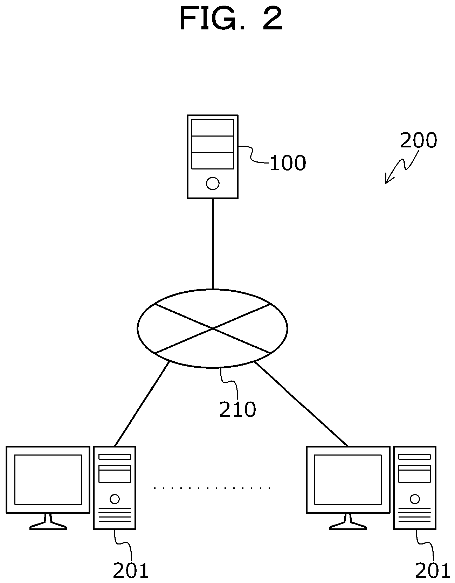

Specifically, there may be a case in which the speaker identification device 100 transmits, to a client device 201 illustrated in FIG. 2, the identification result of identifying the speaker as one of the one or more specific persons and the classification result of classifying the speech section regarding a person different from the one or more specific persons. In this case, the client device 201 displays the identification result of identifying the speaker as one of the one or more specific persons and the classification result of classifying the speech section regarding a person different from the one or more specific persons to enable the worker to grasp the results.

### (Example of Speaker Identification System 200)

Next, an example of a speaker identification system 200 to which the speaker identification device 100 illustrated in FIG. 1 is applied will be described with reference to FIG. 2.

FIG. 2 is an explanatory diagram illustrating an example of the speaker identification system 200. In FIG. 2, the speaker identification system 200 includes the speaker identification device 100 and client devices 201.

In the speaker identification system 200, the speaker identification device 100 and the client devices 201 are connected via a wired or wireless network 210. The network 210 is, for example, a local area network (LAN), a wide area network (WAN), the Internet, or the like.

The speaker identification device 100 receives designation of one or more specific persons from the client device 201. The speaker identification device 100 generates the first identification model using the first learning data for each specific person of the designated one or more specific persons and the second learning data for a person different from the designated one or more specific persons.

The speaker identification device 100 receives the voice information indicating a conversation voice from the client device 201. The speaker identification device 100 generates the identification result regarding each specific person of the one or more specific persons and the classification result regarding a person different from the one or more specific persons on the basis of the received voice information using the generated first identification model. The speaker identification device 100 transmits, to the client device 201, the identification result regarding each specific person of the one or more specific persons and the classification result regarding a person different from the one or more specific persons.

The client device 201 is a computer used by the worker. The client device 201 displays the received identification result regarding each specific person of the one or more specific persons and the received classification result regarding a person different from the one or more specific persons. In this way, the speaker identification device 100 may implement a service of providing, to the client device 201, the identification result regarding each specific person of the one or more specific persons and the classification result regarding a person different from the one or more specific persons.

### (Hardware Configuration Example of Speaker Identification Device 100)

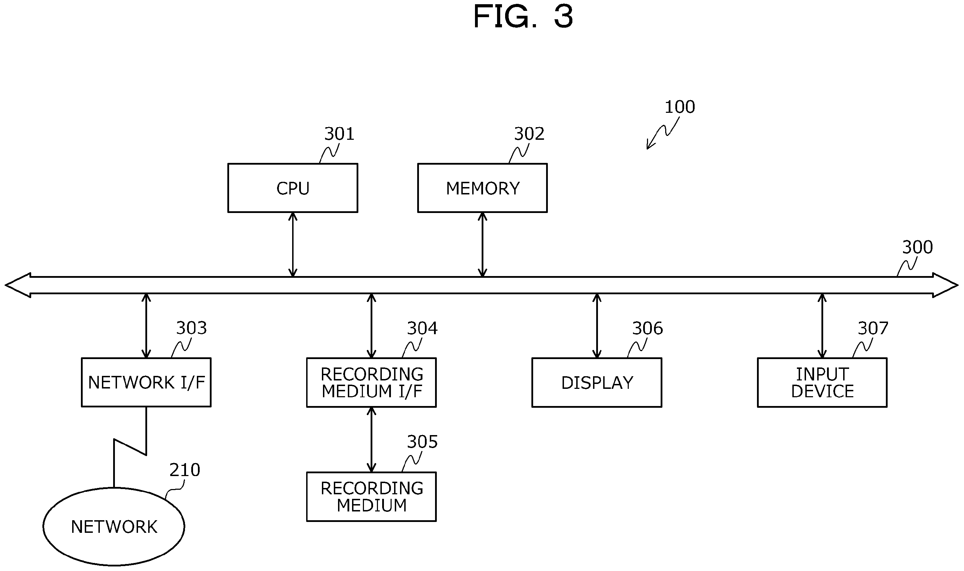

Next, a hardware configuration example of the speaker identification device 100 included in the speaker identification system 200 illustrated in FIG. 2 will be described with reference to FIG. 3.

FIG. 3 is a block diagram illustrating a hardware configuration example of the speaker identification device 100. In FIG. 3, the speaker identification device 100 includes a central processing unit (CPU) 301, a memory 302, a network interface (I/F) 303, a recording medium I/F 304, a recording medium 305, a display 306, and an input device 307. Furthermore, the individual components are connected to one another by a bus 300.

Here, the CPU 301 is in charge of overall control of the speaker identification device 100. For example, the memory 302 includes a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is connected to the network 210 through a communication line, and is connected to another computer through the network 210. Then, the network I/F 303 is in charge of an interface between the network 210 and the inside, and controls input and output of data to and from another computer. The network I/F 303 is, for example, a modem, a LAN adapter, or the like.

The recording medium I/F 304 controls read/write of data to/from the recording medium 305 under the control of the CPU 301. Examples of the recording medium I/F 304 include a disk drive, a solid state drive (SSD), a universal serial bus (USB) port, and the like. The recording medium 305 is a nonvolatile memory that stores data written under the control of the recording medium I/F 304. Examples of the recording medium 305 include a disk, a semiconductor memory, a USB memory, and the like. The recording medium 305 may be removably installed on the speaker identification device 100.

The display 306 displays data such as a document, an image, and function information, as well as a cursor, an icon, or a tool box. The display 306 is, for example, a cathode ray tube (CRT), a liquid crystal display, an organic electroluminescence (EL) display, or the like. The input device 307 has keys for inputting characters, numbers, various instructions, and the like, and inputs data. The input device 307 may be a keyboard, a mouse, or the like, or may be a touch-panel input pad, a numeric keypad, or the like.

The speaker identification device 100 may include, for example, a printer, a scanner, a microphone, a speaker, and the like, in addition to the above-described components. Furthermore, the speaker identification device 100 may include a plurality of the recording medium I/F 304 and the recording media 305. Furthermore, the speaker identification device 100 may not include the recording medium I/F 304 and the recording medium 305.

### (Hardware Configuration Example of Client Device 201)

Since the hardware configuration example of the client device 201 is similar to the hardware configuration example of the speaker identification device 100 illustrated in FIG. 3, for example, description thereof is omitted.

### (Functional Configuration Example of Speaker Identification Device 100)

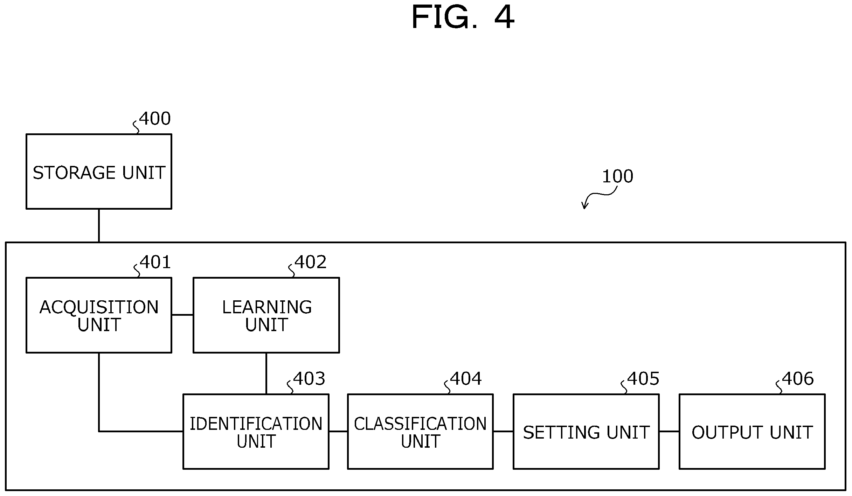

Next, a functional configuration example of the speaker identification device 100 will be described with reference to FIG. 4.

FIG. 4 is a block diagram illustrating a functional configuration example of the speaker identification device 100. The speaker identification device 100 includes a storage unit 400, an acquisition unit 401, a learning unit 402, an identification unit 403, a classification unit 404, a setting unit 405, and an output unit 406.

The storage unit 400 is implemented by a storage area of the memory 302, the recording medium 305, or the like illustrated in FIG. 3, for example. Hereinafter, a case where the storage unit 400 is included in the speaker identification device 100 will be described. However, the present embodiment is not limited to this case. For example, there may be a case where the storage unit 400 is included in a device different from the speaker identification device 100, and the speaker identification device 100 can refer to content stored in the storage unit 400.

The acquisition unit 401 to the output unit 406 function as an example of a control unit. Specifically, for example, the acquisition unit 401 to the output unit 406 implement functions thereof by causing the CPU 301 to execute a program stored in the storage area of the memory 302, the recording medium 305, or the like or by the network I/F 303 illustrated in FIG. 3. A processing result of each functional unit is stored in the storage area of the memory 302, the recording medium 305, or the like illustrated in FIG. 3, for example.

The storage unit 400 stores various sorts of information to be referred to or updated in the processing of each functional unit. The storage unit 400 stores the identification model for identifying a speaker from the input voice information. The identification model identifies a speaker from input voice information. The identification model is, for example, an NN. Specifically, the identification model is generated on the basis of learning data in which voice information indicating a speech voice of a person and label information indicating the person are associated with each other. The learning data used to generate the identification model is, for example, for 100 to 200 people. The storage unit 400 stores, for example, a network topology and parameters representing the identification model.

The storage unit 400 stores the learning data to be used in the learning processing for updating the identification model. The learning processing is, for example, processing of updating an output layer in the case where the identification model is an NN. The storage unit 400 has, for example, the first learning data for each specific person of a plurality of specific persons. The first learning data is learning data in which voice information indicating a speech voice of a specific person and label information indicating the specific person are associated with each other.

The storage unit 400 has the second learning data for each of other persons different from the one or more specific persons. The second learning data is learning data in which voice information indicating a speech voice of another person and label information indicating that the another person is different from the specific persons are associated with each other. The label information does not indicate a specific person but indicates a dummy person.

The storage unit 400 stores the first identification model generated by updating the identification model. The first identification model identifies a speaker from the input voice information. The first identification model is, for example, an NN. The storage unit 400 stores, for example, a network topology and parameters representing the first identification model.

The acquisition unit 401 acquires various sorts of information to be used for the processing of each functional unit. The acquisition unit 401 stores the acquired various sorts of information in the storage unit 400 or outputs the acquired various sorts of information to each functional unit. Furthermore, the acquisition unit 401 may output the various sorts of information stored in the storage unit 400 to each functional unit. The acquisition unit 401 acquires the various types of information on the basis of, for example, an operating input by a user. The acquisition unit 401 may receive the various sorts of information from a device different from the speaker identification device 100, for example.

The acquisition unit 401 acquires the voice information indicating a conversation voice. The conversation voice is a conversation voice to be processed for identifying a speaker for each speech section. As a result, the acquisition unit 401 can provide the identification unit 403 with the voice information indicating a conversation voice to cause the identification unit 403 to identify a speaker who has spoken in a speech section included in the conversation voice.

The acquisition unit 401 acquires the first learning data and the second learning data. The acquisition unit 401 acquires, for example, the first learning data for each specific person of the one or more specific persons and the second learning data for each of the other persons different from the specific persons. The first learning data for each specific person of the one or more specific persons is, for example, the first learning data for each specific person of a plurality of specific persons stored in the storage unit 400. As a result, the acquisition unit 401 can provide the learning unit 402 with the first learning data and the second learning data to enable the learning unit 402 to generate the first identification model capable of identifying the speaker from each specific person of the one or more specific persons on the basis of the identification model.

The acquisition unit 401 may receive designation of one or more specific persons and extract the first learning data for each specific person of the designated one or more specific persons from the first learning data for each specific person of the plurality of specific persons stored in the storage unit 400. The specific person is a person whose learning data can be prepared in advance. The designated specific person is favorably a specific person who is speaking in the conversation voice acquired by the acquisition unit 401 among the plurality of persons. As a result, the acquisition unit 401 can provide the learning unit 402 with the first learning data and the second learning data to enable the learning unit 402 to generate the first identification model capable of identifying the speaker from each specific person of the designated one or more specific persons on the basis of the identification model.

The acquisition unit 401 may acquire the voice information indicating the speech voice of a specific person or another person and generate the first learning data or the second learning data. The acquisition unit 401 acquires, for example, the voice information indicating the speech voice of a specific person or another person and processes the acquired voice information according to a predetermined recording environment. The predetermined recording environment is a recording environment in which the conversation voice to be processed is predicted to be recorded.

Then, the acquisition unit 401 creates the first learning data in which the processed voice information of the specific person and the label information indicating the specific person are associated with each other. Alternatively, the acquisition unit 401 creates the second learning data in which the processed voice information of the another person and the label information indicating that the another person is different from the specific person are associated with each other. As a result, the acquisition unit 401 can enable the learning unit 402 to generate the first identification model capable of accurately identifying the speaker.

The learning unit 402 executes the learning processing for the identification model using various learning data to generate the first identification model. The learning unit 402 executes the learning processing for the identification model using the first learning data for each specific person of the one or more specific persons and the second learning data for each of the other persons different from the specific persons to generate the first identification model.

For example, in a case where the voice information included in the first learning data is input to the identification model, the learning unit 402 updates the identification model such that the specific person indicated by the label information included in the first learning data is identifiable. Furthermore, for example, in a case where the voice information included in the second learning data is input to the identification model, the learning unit 402 updates the identification model such that the speaker is identified as another person different from the specific person. As a result, the learning unit 402 can generate the first identification model capable of identifying the speaker as each specific person of the one or more specific persons on the basis of the identification model.

The learning unit 402 executes the learning processing for the identification model using the first learning data for each specific person of the designated one or more specific persons and the second learning data for each of the other persons different from the specific persons to generate the first identification model.

For example, in a case where the voice information included in the first learning data is input to the identification model, the learning unit 402 updates the identification model such that the specific person indicated by the label information included in the first learning data is identifiable. Furthermore, for example, in a case where the voice information included in the second learning data is input to the identification model, the learning unit 402 updates the identification model such that the speaker is identified as another person different from the specific person.

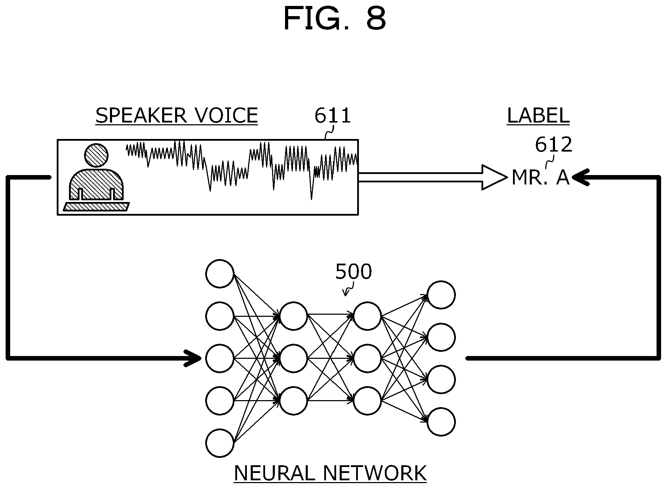

Specifically, the learning unit 402 generates the first identification model, as will be described below in FIG. 8. Thereby, the learning unit 402 can generate the first identification model capable of identifying the speaker from each specific person of the designated one or more specific persons, of the plurality of specific persons, and incapable of identifying the speaker from undesignated specific persons, on the basis of the identification model. Therefore, the learning unit 402 can enable the first identification model to be generatable, which does not identify the speaker from a specific person not speaking in the conversation voice, of the plurality of specific persons. As a result, the learning unit 402 can enable the identification unit 403 to accurately identify the speaker who has spoken in a speech section of the conversation voice using the first identification model.

The identification unit 403 inputs the voice information indicating the conversation voice into the generated first identification model, and identifies the speaker who has spoken in each speech section of a plurality of speech sections included in the conversation voice as one of the one or more specific persons and the persons different from the specific persons.

Thereby, the identification unit 403 accurately identifies the speaker who has spoken in a speech section even if the conversation voice includes a speech section in which a person different from the specific persons has spoken. For example, when the speaker who has spoken in a speech section is actually a person different from the specific persons, the identification unit 403 can prevent the speaker from being erroneously identified as one of the one or more specific persons. Therefore, the identification unit 403 can prevent the speech section in which the speaker is actually a person different from the specific persons from being mixed in the speech sections in which the speaker is identified as a specific person, and accurately identify the speaker who has spoken in a speech section.

The classification unit 404 classifies the speech section in which the speaker is identified as a person different from the specific persons into each group of one or more groups on the basis of the voice characteristic of the speech section. For example, the classification unit 404 inputs the voice information of the speech section in which the speaker is identified as a person different from the specific persons into the identification model, and acquires the voice characteristic of the speech section. The classification unit 404 classifies the speech section in which the speaker is identified as a person different from the specific persons into each group of one or more groups on the basis of the acquired voice characteristic. Specifically, the classification unit 404 classifies the speech section into each group of the one or more groups by clustering the voice characteristic of the speech section.

Thereby, the classification unit 404 can classify the speech sections in which a person different from the specific persons has spoken, for which preparation of the first learning data in advance is difficult, into groups by person, and the worker can easily and specifically identify the speaker. Furthermore, since the speech sections in which the speaker is one of the one or more specific persons have already been specified and the number of speech sections to be classified is reduced, the classification unit 404 can accurately classify the speech sections.

The setting unit 405 receives designation of a person to be associated with the speech section in which the speaker is identified as a person different from the specific persons. After the output unit 406 outputs the result of classifying the speech section in which the speaker is identified as a person different from the specific persons, the setting unit 405 receives designation of the person to be associated with the speech section in which the speaker is identified as a person different from the specific persons on the basis of an operation input of the user. As a result, the setting unit 405 can acquire the result of the worker specifically identifying the speaker.

The output unit 406 outputs a processing result of one of the function units. An output format is, for example, display on the display 306, print output to a printer, transmission to an external device by the network I/F 303, or storage to the storage area of the memory 302, the recording medium 305, or the like.

The output unit 406 outputs the speech section in which the speaker is identified as one of the one or more specific persons in association with the one person, and outputs the result of classifying the speech section in which the speaker is identified as a person different from the specific persons. The output unit 406 outputs, for example, the speech section in which the speaker is identified as one of the one or more specific persons in association with the one specific person on the display 306. Furthermore, the output unit 406 outputs, for example, the result of classifying the speech section in which the speaker is identified as a person different from the specific persons on the display 306.

Thereby, the output unit 406 can enable the worker to grasp the identification result of identifying the speaker as one of the one or more specific persons and can reduce the work load on the worker. Furthermore, the output unit 406 can enable the worker to grasp the classification result of classifying the speech section regarding a person different from the one or more specific person. Then, the output unit 406 can enable the worker to identify the speaker who has spoken in a speech section classified into a group as a specific person by listening to the voice of the speech section classified into the group, and can reduce the work load on the worker.

The output unit 406 may output the speech section in which the speaker is identified as a person different from the specific persons in association with the designated person. The output unit 406 displays, on the display 306, the speech section in which the speaker is identified as a person different from the specific persons in association with the designated person, for example. Thereby, the output unit 406 can enable the worker to refer to the result of identifying the speaker who has spoken in a speech section classified into a group as a specific person, and can improve the convenience of the worker.

### (Operation Example of Speaker Identification Device 100)

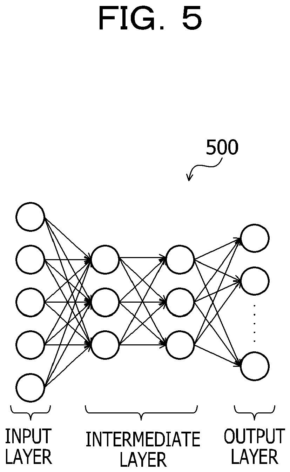

Next, an operation example of the speaker identification device 100 will be described with reference to FIGs. 5 to 11. First, an example of a learned NN 500 stored in the speaker identification device 100 will be described with reference to FIG. 5.

FIG. 5 is an explanatory diagram illustrating an example of the learned NN 500. In FIG. 5, the learned NN 500 has an input layer, one or more intermediate layers, and an output layer. Each layer of the input layer, the intermediate layer, and the output layer has one or more nodes. The node executes predetermined processing for a value input to its own node, and outputs a value obtained by the predetermined processing.

The learned NN 500 receives input of the voice information for a unit time at one or more nodes in the input layer. The learned NN 500 receives, for example, input of a characteristic amount of each time in the voice information for a unit time at each node of the one or more nodes in the input layer. The learned NN 500 executes processing specified for the nodes of the intermediate layer and the output layer in response to the input of the voice information for a unit time, and expresses the identification result of the speaker who has spoken in the unit time using an output value of the one or more nodes of the output layer.

The learned NN 500 is generated on the basis of, for example, the learning data for 100 to 200 people, in which the voice information indicating the speech voice of a person and the label information indicating the person are associated with each other. Therefore, the learned NN 500 tends to form a network topology suitable for the purpose of identifying the speaker. Furthermore, the learned NN 500 can identify the speaker as one of the 100 to 200 people. In other words, the output layer has nodes respectively corresponding to the 100 to 200 people and can express an identification result of identifying the speaker as one of the 100 to 200 people.

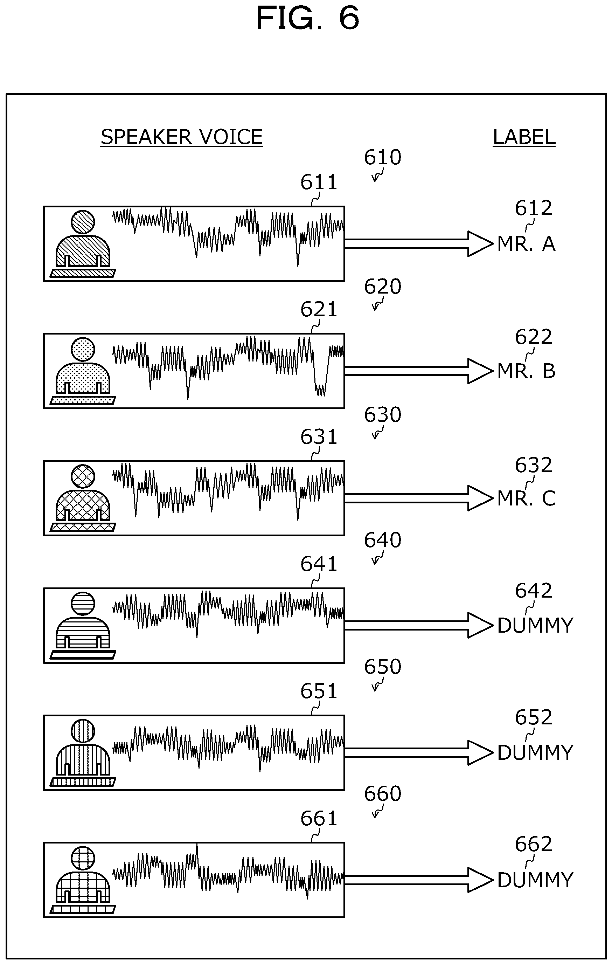

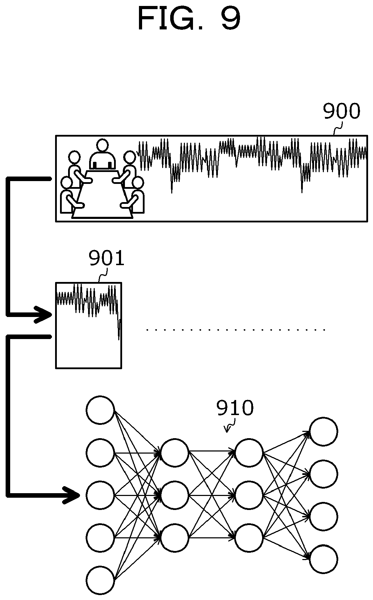

Thereby, the speaker identification device 100 can store the learned NN 500 that forms the network topology suitable for the purpose of identifying the speaker. The speaker identification device 100 can enable an updated NN 910 as will be described below in FIG. 9 to be generatable, which uses the network topology suitable for the purpose of identifying the speaker on the basis of the learned NN 500. The updated NN 910 is used when actually trying to identify the speaker who has spoken in one of the speech sections of the conference voice to be described below. Next, an example of the learning data stored in the speaker identification device 100 will be described with reference to FIG. 6.

FIG. 6 is an explanatory diagram illustrating an example of the learning data. In FIG. 6, the learning data is a set of input data and correct answer data. The input data is the voice information indicating a speech voice. The correct answer data is the label information indicating the speaker. In the example of FIG. 6, the speaker identification device 100 stores learning data 610, learning data 620, learning data 630, learning data 640, learning data 650, learning data 660, and the like.

The learning data 610, the learning data 620, and the learning data 630 are the learning data about specific persons for making the speaker identifiable from the specific persons. The specific person is a person whose learning data can be prepared in advance. The learning data 610 associates voice information 611 with label information 612 indicating Mr. A. The learning data 620 associates voice information 621 with label information 622 indicating Mr. B. The learning data 630 associates voice information 631 with label information 632 indicating Mr. C. The speaker identification device 100 may store learning data about a specific person other than Mr. A, Mr. B, and Mr. C.

The learning data 640, the learning data 650, and the learning data 660 are the learning data for making the speaker identifiable from dummies. The learning data 640 associates voice information 641 with label information 642 indicating a dummy. The learning data 650 associates voice information 651 with label information 652 indicating a dummy. The learning data 660 associates voice information 661 with label information 662 indicating a dummy. The speaker identification device 100 may store learning data for making the speaker identifiable from dummies in addition to the learning data 640, the learning data 650, and the learning data 660.

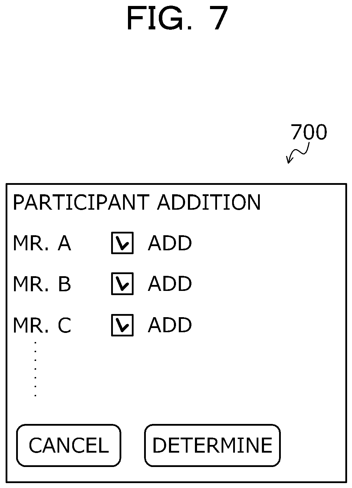

Thereby, the speaker identification device 100 can enable the updated NN 910 as will be described below in FIG. 9 to be generatable, which is used to actually try to identify the speaker who has spoken in any of the speech sections of the conference voice to be described below on the basis of the learning data. Next, an example in which the speaker identification device 100 receives designation of a specific person will be described with reference to FIG. 7.

FIG. 7 is an explanatory diagram illustrating an example of receiving designation of a specific person. In FIG. 7, the speaker identification device 100 displays a participant addition screen 700 on the display 306. The speaker identification device 100 receives designation of a specific person who will be a participant of a conference through the participant addition screen 700. In the example of FIG. 7, the speaker identification device 100 receives designation of Mr. A, Mr. B, and Mr. C, who are specific persons.

Thereby, the speaker identification device 100 becomes a participant of the conference and can receive designation of the specific person determined to speak in one of the speech sections of the conference voice to be described below by the worker. Therefore, the speaker identification device 100 can determine which specific person's learning data should be used when generating the updated NN 910 as will be described below in FIG. 9. Then, the speaker identification device 100 can enable the updated NN 910 as will be described below in FIG. 9 suitable for identifying the speaker who has spoken in a speech section of a conference voice 900 as will be described below in FIG. 9. Furthermore, the speaker identification device 100 can reduce the amount of processing needed when generating the updated NN 910 as will be described below in FIG. 9 as compared with a case of using all the stored learning data.

Furthermore, the speaker identification device 100 may receive designation of a person who is not a specific person but a person who will be a participant of the conference for which learning data is not prepared in advance. The speaker identification device 100 may receive, for example, designation of Mr. D and Mr. E. Thereby, the speaker identification device 100 can acquire a label indicating a person that can be used as an ID of a group when speech sections are classified into groups. Next, an example in which the speaker identification device 100 updates the learned NN 500 and generates the updated NN 910 on the basis of the learning data about the designated specific persons will be described with reference to FIG. 8.

FIG. 8 is an explanatory diagram illustrating an example of updating the learned NN 500. In FIG. 8, the speaker identification device 100 extracts the learning data of each specific person of one or more specific persons designated in FIG. 7 from the learning data illustrated in FIG. 6.

For example, in a case where the speaker identification device 100 extracts the learning data 610 and inputs the voice information 611 to the input layer of the learned NN 500, the output layer of the learned NN 500 is updated such that the output layer of the learned NN 500 expresses Mr. A indicated by the label information 612. Similarly, the speaker identification device 100 extracts the learning data 620 and the learning data 630, and updates the output layers of the learned NNs 500. Furthermore, similarly, the speaker identification device 100 extracts the learning data 640, the learning data 650, and the learning data 660, and updates the output layers of the learned NNs 500.

Thereby, the speaker identification device 100 can update the learned NN 500 such that the speaker is identifiable as the designated specific person in the case where the speaker is the specific person, and the speaker is identifiable as a dummy in the case where the speaker is not a designated specific person. Then, the speaker identification device 100 can generate the updated NN 910 as will be described below in FIG. 9. Next, an example in which the speaker identification device 100 identifies the speaker who has spoken in one of the speech sections of the conference voice to be described below using the updated NN 910 by the specific speaker identification processing, and assigns a label to one of the speech sections of the conference voice to be performed will be described with reference to FIG. 9.

FIG. 9 is an explanatory diagram illustrating an example of assigning a label to a speech section. In FIG. 9, the speaker identification device 100 acquires the conference voice 900. The speaker identification device 100 removes a noise section from the conference voice 900 and extracts the speech sections. The speaker identification device 100 inputs voice information 901 of a speech section into the updated NN 910, identifies the speaker who has spoken in the speech section, and assigns the label of the identified speaker to the speech section.

Specifically, the speaker identification device 100 divides the voice information 901 of the speech section into voice information for each unit time. The speaker identification device 100 inputs the voice information for each unit time into the input layer of the updated NN 910, and identifies the speaker who has spoken for each unit time. The speaker identification device 100 identifies a person who has been identified as the speaker who has spoken in the unit time most frequently in the speech section as the speaker who has spoken in the speech section. The speaker identification device 100 assigns the label indicating the person identified as the speaker who has spoken in the speech section to the speech section.

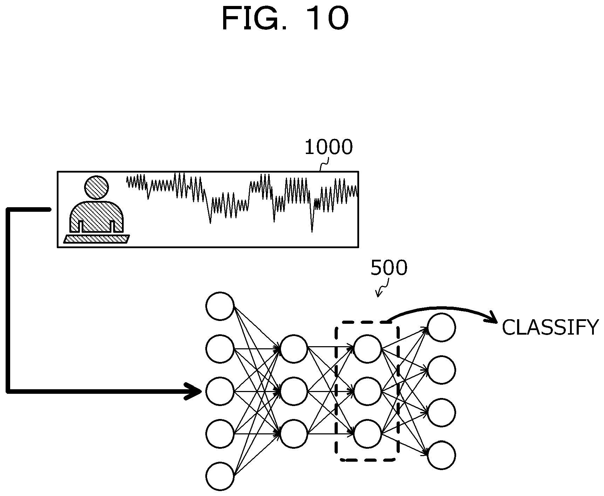

As a result, the speaker identification device 100 can add the label indicating the specific person to the speech section in the case where the speaker who has spoken in the speech section extracted from the conference voice 900 is the designated specific person. Furthermore, the speaker identification device 100 can add the label indicating a dummy to the speech section in the case where the speaker who has spoken in the speech section extracted from the conference voice 900 is another person different from the designated specific person. Therefore, the speaker identification device 100 can accurately identify the speaker who has spoken in the speech section. Next, an example in which the speaker identification device 100 further classifies the speech section to which the label indicating a dummy is assigned by the unspecified speaker identification processing will be described with reference to FIG. 10.

FIG. 10 is an explanatory diagram illustrating an example of classifying speech sections. In FIG. 10, the speaker identification device 100 inputs the voice information 1000 of the speech section to which a label indicating a dummy is assigned to the learned NN 500. Then, the speaker identification device 100 acquires the output value of each node of one or more nodes included in the last intermediate layer among the one or more intermediate layers as the voice characteristic of voice information 1000.

Specifically, the speaker identification device 100 divides the voice information 1000 of the speech section to which the label indicating a dummy is assigned into voice information for each unit time. The speaker identification device 100 inputs the voice information for each unit time into the input layer of the learned NN 500, and acquires the output value of each node of the one or more nodes included in the last intermediate layer of the one or more intermediate layers as the voice characteristic. The speaker identification device 100 clusters the voice characteristics and classifies the speech sections to which the label indicating a dummy is assigned into groups.

The speaker identification device 100 assigns the ID of the group into which the speech section to which the label indicating a dummy is assigned is classified to the speech section to which the label indicating a dummy is assigned. For example, in FIG. 7, in the case where the speaker identification device 100 has received designation of Mr. D and Mr. E as persons who will be participants in the conference that are not specific persons, the label indicating Mr. D and the label indicating Mr. E may be used as the IDs of the groups. The speaker identification device 100 may use a number assigned to the group as the ID of the group.

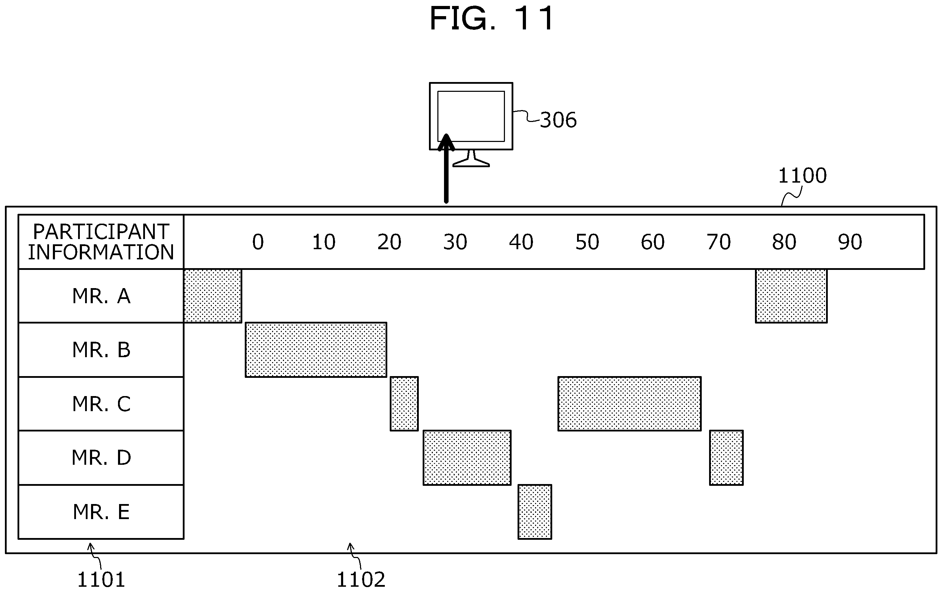

Thereby, the speaker identification device 100 can classify the speech section spoken by a person who is not a specific person and whose learning data is difficult to prepare in advance into a group by person and assign an ID. Furthermore, since the speaker identification device 100 classifies the speech section excluding the speech section in which the speaker is identified as a specific person, the speech section can be easily and accurately classified. Next, an example in which the speaker identification device 100 displays a correspondence result screen 1100 displaying a result of assigning the label to the speech section in FIG. 9 and a result of classifying the speech section in FIG. 10 will be described with reference to FIG. 11.

FIG. 11 is an explanatory diagram illustrating an example of displaying the correspondence result screen 1100. The speaker identification device 100 displays the correspondence result screen 1100 on the display 306. The correspondence result screen 1100 includes a field 1101 for displaying participant information and a field 1102 for displaying the speech sections in the conference voice 900. In the field 1101, the label indicating a specific person who is a participant of the conference and a label indicating a person other than specific persons who is a participant of the conference, which are designated in FIG. 7, are displayed as the participant information. Furthermore, in the field 1101, the number assigned to the group may be displayed instead of the label indicating a person other than specific persons who is a participant of the conference if a person other than specific persons who is a participant of the conference is not specified in FIG. 7.

In the field 1102, the speech section in which the specific person is identified as the speaker is displayed in association with the same line as the label indicating the specific person who is a participant of the conference displayed in the field 1101. At this time, the speech section is displayed such that the position of the conference voice within a reproduction time is displayed in a specifiable manner, for example. In the example of FIG. 11, the reproduction time is 0 to 90 minutes. The speaker identification device 100 may reproduce the voice of the speech section in which the specific person is identified as the speaker in response to a click on the label indicating the specific person who is a participant of the conference displayed in the field 1101.

Furthermore, in the field 1102, the speech section belonging to the group to which the label indicating a person other than specific persons is displayed in association with the same line as the label indicating a person other than the specific persons who are participants of the conference displayed in the field 1101. At this time, the speech section is displayed such that the position of the conference voice within a reproduction time is displayed in a specifiable manner, for example. The speaker identification device 100 may reproduce the voice of the speech section belonging to the group to which the label indicating a person other than the specific persons in response to a click on the label indicating a person other than the specific persons who is a participant of the conference displayed in the field 1102. Thereby, the speaker identification device 100 allows the worker to hear the voice of the speech section belonging to the group and easily identify who is specifically the speaker who has spoken in the speech section belonging to the group.

Furthermore, the speaker identification device 100 may receive an operation input for replacing the label indicating a person other than the specific persons who is a participant of the conference displayed in the field 1101. Then, the speaker identification device 100 may replace the label assigned to the group on the basis of the operation input. Thereby, the speaker identification device 100 can associate the label indicating the speaker specifically identified by the worker with the speech section belonging to the group, and can store the result of accurately identifying the speaker who has spoken in the speech section.

Here, the case in which the speaker identification device 100 identifies the speaker who has spoken in the speech section using the updated NN 910 after specifying the speech section has been described, but the present embodiment is not limited to the case. For example, the speaker identification device 100 may specify the speech section by collecting the unit times identified as the same speaker after specifying the speaker using the updated NN 910 for each unit time from the beginning of the conference voice.

Furthermore, here, the case in which the speaker identification device 100 identifies a person who has been identified as the speaker who has spoken in the unit time most frequently in the speech section as the speaker who has spoken in the speech section has been described, but the present embodiment is not limited to the case. For example, there may be a case where the speaker identification device 100 groups the unit times identified as the same speaker in one of the speech sections, and divides the speech section into two or more speech sections in which different speakers have spoken.

### (Overall Processing Procedure)

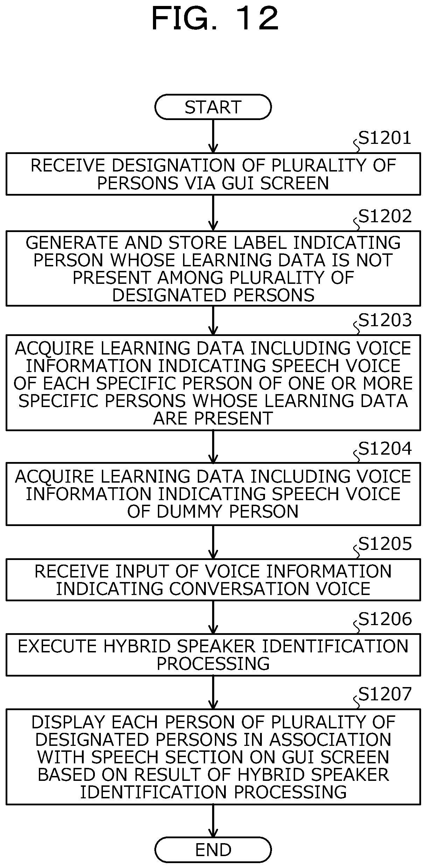

Next, an example of an overall processing procedure executed by the speaker identification device 100 will be described with reference to FIG. 12. The overall processing is implemented by, for example, the CPU 301, the storage area of the memory 302, the recording medium 305, or the like, and the network I/F 303 illustrated in FIG. 3.

FIG. 12 is a flowchart illustrating an example of an overall processing procedure. In FIG. 12, the speaker identification device 100 receives designation of a plurality of persons via a graphical user interface (GUI) screen (step S1201). Then, the speaker identification device 100 generates a label indicating a person whose learning data is not present among the plurality of designated persons, and stores the label as the ID assigned to the group (step S1202).

Next, the speaker identification device 100 acquires the learning data including the voice information indicating the speech voice of each specific person of one or more specific persons whose learning data are present among the plurality of designated persons (step S1203). Then, the speaker identification device 100 acquires the learning data including the voice information indicating the speech voice of a dummy person (step S1204).

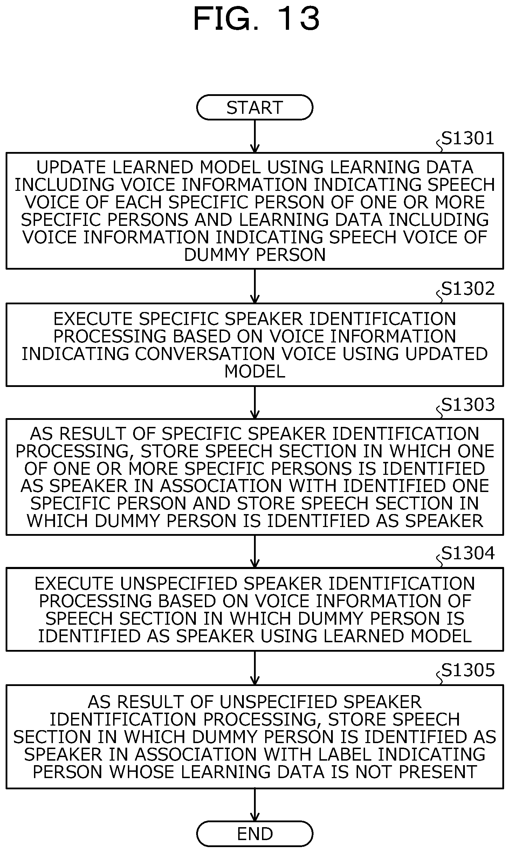

Next, the speaker identification device 100 receives the input of the voice information indicating the conversation voice (step S1205). Then, the speaker identification device 100 executes hybrid speaker identification processing to be described below in FIG. 13 (step S1206). Next, the speaker identification device 100 displays each person of the plurality of designated persons with the speech section on the GUI screen in association with each other on the basis of the result of the hybrid speaker identification processing (step S1207). Then, the speaker identification device 100 terminates the overall processing.

### (Hybrid Speaker Identification Processing Procedure)

Next, an example of the hybrid speaker identification procedure executed by the speaker identification device 100 will be described with reference to FIG. 13. The hybrid speaker identification processing is implemented by, for example, the CPU 301, a storage area of the memory 302, the recording medium 305, or the like, and the network I/F 303 illustrated in FIG. 3.

FIG. 13 is a flowchart illustrating an example of the hybrid speaker identification processing procedure. In FIG. 13, the speaker identification device 100 updates the learned model using the learning data including the voice information indicating the speech voice of each specific person of the one or more specific persons, and the learning data including the voice information indicating the speech voice of a dummy person (step S1301).

Next, the speaker identification device 100 executes the specific person identification processing as illustrated in FIG. 9 on the basis of the voice information indicating the conversation voice using the updated model obtained by the update (step S1302). Then, as a result of the specific person identification processing, the speaker identification device 100 stores the speech section in which one of the one or more specific persons is identified as the speaker in association with the one specific person, and stores the speech section in which a dummy person is identified as the speaker (step S1303).

Next, the speaker identification device 100 executes the unspecified speaker identification processing as illustrated in FIG. 10 on the basis of the voice information of the speech section in which a dummy person is identified as the speaker using the learned model (step S1304). Then, the speaker identification device 100 stores the speech section in which a dummy person is identified as the speaker in association with the label indicating a person whose learning data is not present as a result of the unspecified speaker identification processing (step S1305). Thereafter, the speaker identification device 100 terminates the hybrid speaker identification processing.

Here, the speaker identification device 100 may change the order of some steps in the flowcharts of FIGs. 12 and 13 and execute the processing. For example, steps S1202 to S1205 may be exchanged in the processing order. Furthermore, the speaker identification device 100 may omit the processing of some steps of the flowcharts illustrated in FIGs. 12 and 13. For example, the processing of step S1202 can be omitted.

As described above, according to the speaker identification device 100, the learning processing is executed for the identification model using the first learning data for a specific person and the second learning data for another person different from the specific person, and the first identification model can be generated. According to the speaker identification device 100, the voice information indicating the conversation voice is input to the generated first identification model, and the speaker who has spoken in each speech section of a plurality of speech sections included in the conversation voice can be identified as either the specific person or the person different from the specific person. According to the speaker identification device 100, the speech section in which the speaker is identified as a person different from the specific person can be classified into each group of one or more groups on the basis of the voice characteristic of the speech section. According to the speaker identification device 100, the speech section in which the speaker is identified as specific person can be output in association with the specific person, and the result of classifying the speech section in which the speaker is identified as a person different from the specific person can be output. Thereby, the speaker identification device can make the speaker who has spoken in each speech section of the plurality of speech sections included in the conversation voice accurately identifiable.

According to the speaker identification device 100, designation of one or more specific persons can be received. According to the speaker identification device 100, the learning processing can be executed for the identification model using the first learning data for each specific person of the designated one or more specific persons and the second learning data for each of the other persons different from the specific persons. Thereby, the speaker identification device 100 can generate the first identification model capable of accurately identifying a specific person who speaks in the conversation voice.

According to the speaker identification device 100, the voice information of the speech section in which the speaker is identified as a person different from the specific persons can be input to the identification model, and the voice characteristic of the speech section can be acquired. According to the speaker identification device 100, the speech section in which the speaker is identified as a person different from the specific person can be classified into each group of one or more groups on the basis of the acquired voice characteristic. Thereby, the speaker identification device 100 can accurately classify the speech section.

According to the speaker identification device 100, designation of a person to be associated with the speech section in which the speaker is identified as a person different from the specific persons can be received. According to the speaker identification device 100, the speech section in which the speaker is identified as a person different from the specific persons, and the designated person can be output in association with each other. Thereby, the speaker identification device 100 can store the result of the worker specifically identifying the speaker.

According to the speaker identification device 100, for example, the voice information indicating the speech voice of another person different from specific persons can be acquired, and the acquired voice information can be processed according to a predetermined recording environment. According to the speaker identification device 100, the second learning data in which the processed voice information of the another person different from specific persons and the label information indicating that the another person is different from the specific persons are associated with each other can be created. Thereby, in a case where the conversation voice is recorded in a predetermined recording environment, the speaker identification device 100 can enables the first identification model to be generatable, which can accurately identify the speaker who has spoken in the speech section included in the conversation voice.

Note that the speaker identification method described in the present embodiment may be implemented by executing a program prepared in advance on a computer such as a personal computer or a workstation. The speaker identification program described in the present embodiment is recorded on a computer-readable recording medium such as a hard disk, flexible disk, compact disk read only memory (CD-ROM), magneto-optical disk (MO), or digital versatile disc (DVD), and is read from the recording medium to be executed by the computer. Furthermore, the speaker identification program described in the present embodiment may be distributed via a network such as the Internet.

## Claims

1. A speaker identification program for causing a computer to execute processing of:
generating a first identification model by executing learning processing for an identification model that identifies a speaker from input voice information using first learning data and second learning data, the first learning data being for each person of one or more persons and in which voice information that indicates a speech voice of the each person and label information that indicates the each person are associated, and the second learning data being for each another person different from the one or more persons and in which voice information that indicates a speech voice of the each another person and label information that indicates that the each another person is different from the one or more persons are associated;
inputting voice information that indicates a conversation voice to the generated first identification model, and identifying a speaker who has spoken in each speech section of a plurality of speech sections included in the conversation voice as one of the one or more persons or the different person;
classifying the speech section in which the speaker is identified as the different person into each group of one or more groups based on a voice characteristic of the speech section; and
outputting the speech section in which the speaker is identified as one of the one or more persons in association with the identified person, and outputting a result of classifying the speech section in which the speaker is identified as the different person.

2. The speaker identification program according to claim 1, for causing the computer to execute processing of:
receiving designation of the one or more persons, wherein
the processing of generating includes
generating the first identification model by executing the learning processing for the identification model using the first learning data for each person of the designated one or more persons and the second learning data for the each another person.

3. The speaker identification program according to claim 1 or 2, for causing the computer to execute processing of:
inputting voice information of the speech section in which the speaker is identified as the different person to the identification model and acquiring the voice characteristic of the speech section, wherein
the processing of classifying includes
classifying the speech section in which the speaker is identified as the different person into the each group of one or more groups based on the acquired voice characteristic.

4. The speaker identification program according to any one of claims 1 to 3, for causing the computer to execute processing of:
receiving designation of a person to be associated with the speech section in which the speaker is identified as the different person, wherein
the processing of outputting includes
outputting the speech section in which the speaker is identified as the different person and the designated person in association with each other.

5. The speaker identification program according to any one of claims 1 to 4, for causing the computer to execute processing of:
acquiring the voice information that indicates the speech voice of the each another person;
processing the acquired voice information according to a predetermined recording environment; and
creating second learning data in which the processed voice information of the each another person and the label information that indicates that the each another person is the different person are associated with each other.

6. A speaker identification method for a computer to execute a process comprising:
generating a first identification model by executing learning processing for an identification model that identifies a speaker from input voice information using first learning data and second learning data, the first learning data being for each person of one or more persons and in which voice information that indicates a speech voice of the each person and label information that indicates the each person are associated, and the second learning data being for each another person different from the one or more persons and in which voice information that indicates a speech voice of the each another person and label information that indicates that the each another person is different from the one or more persons are associated;
inputting voice information that indicates a conversation voice to the generated first identification model, and identifying a speaker who has spoken in each speech section of a plurality of speech sections included in the conversation voice as one of the one or more persons or the different person;
classifying the speech section in which the speaker is identified as the different person into each group of one or more groups based on a voice characteristic of the speech section; and
outputting the speech section in which the speaker is identified as one of the one or more persons in association with the identified person, and outputting a result of classifying the speech section in which the speaker is identified as the different person.

7. A speaker identification device comprising:
a processor unit configured to:
generate a first identification model by executing learning processing for an identification model that identifies a speaker from input voice information using first learning data and second learning data, the first learning data being for each person of one or more persons and in which voice information that indicates a speech voice of the each person and label information that indicates the each person are associated, and the second learning data being for each another person different from the one or more persons and in which voice information that indicates a speech voice of the each another person and label information that indicates that the each another person is different from the one or more persons are associated,
input voice information that indicates a conversation voice to the generated first identification model, to identify a speaker who has spoken in each speech section of a plurality of speech sections included in the conversation voice as one of the one or more persons or the different person,
classify the speech section in which the speaker is identified as the different person into each group of one or more groups based on a voice characteristic of the speech section, and
output the speech section in which the speaker is identified as one of the one or more persons in association with the identified person, and outputting a result of classifying the speech section in which the speaker is identified as the different person.
